# EUROPÄISCHE PATENTSCHRIFT

(11) **EP 1 634 738 B1**
(45) Veröffentlichungstag und Bekanntmachung des Hinweises auf die Patenterteilung: **30.07.2008**
(21) Anmeldenummer: 05019483.6
(22) Anmeldetag: 07.09.2005
(51) Int. Cl.: B60H 1/00, B62D 53/06

(54) **Bedieneinheit für eine Fahrzeugkomponente**
Operating unit of an automotive component
Unité de commande d'un élément de véhicule

(30) Priorität: 10.09.2004 DE 202004014089 U
(43) Veröffentlichungstag der Anmeldung: 15.03.2006
(73) Patentinhaber: Meusburger Fahrzeugbau GmbH, 94535 Eging am See (DE)
(72) Erfinder: Meusburger, Thomas, 6578 Caviano (CH)
(74) Vertreter: Winter, Brandl, Fürniss, Hübner Röss, Kaiser, Polte Partnerschaft Patent- und Rechtsanwaltskanzlei

(56) Entgegenhaltungen:
- WO-A-91/10576
- BE-A3- 1 015 576
- DE-U1- 29 615 435
- US-A- 4 302 022
- US-B1- 6 343 825

## Beschreibung

### Technisches Gebiet der Erfindung

Die vorliegende Erfindung betrifft einen Sattelauflieger mit einer, in Fahrtrichtung betrachtet, in einen vorderen Teil und einen hinteren Teil geteilten Ladebrücke.

### Stand der Technik

Allgemein bekannt sind Sattelauflieger mit einer, in Fahrtrichtung betrachtet, geraden oder durchgängigen Ladebrücke. Derartige Fahrzeuge eignen sich im Besonderen beispielsweise für die problemlose Verladung von auf Paletten verpackten Waren, da die Paletten mit einem Gabelstapler oder Handhubwagen hindernisfrei über die gesamte Länge der Ladebrücke transportiert werden können.

Bekannt sind weiter Sattelauflieger mit einer gestuften oder gekröpften Ladebrücke, bei der der hintere Ladebrückenteil gegenüber dem vorderen Ladebrückenteil in der Höhe abgesenkt ist. Diese Tiefbett-Bauart dient vor allem zum Transport großvolumiger Lasten, wie Fahrzeugen oder Baumaschinen.

Die vorstehend genannten Bauarten, d.h. mit oder ohne Kröpfung, werden daher im Hinblick auf das jeweilige Anwendungsgebiet hin konzipiert. Um für Einsätze auf den verschiedenen Anwendungsgebieten gerüstet zu sein, war es daher für einen Fuhrparkbetreiber erforderlich, Fahrzeuge beider Bauarten anzuschaffen. Eine größe Zahl von Fahrzeugen im Fuhrpark bedeutet aber höhere Kosten im Zusammenhang mit der Anschaffung und Wartung des Fuhrparks.

Aus der US 4,302,022 ist ein Sattelauflieger gemäß dem Oberbegriff des Anspruchs 1 bekannt.

### Kurzdarstellung der Erfindung

Ausgehend von der US 4,302,022 liegt der Erfindung die Aufgabe zugrunde, einen gattungsgemäßen Sattelauflieger zu schaffen, dessen Gesamtlänge in der absesenkten und angekobenen Stellung des hinteren Ladebrückenteils gleich bleibt..

Diese Aufgabe wird gelöst durch einen Sattelauflieger mit den Merkmalen des Anspruchs 1. Vorteilhafte oder bevorzugte Ausführungsformen sind Gegenstand abhängiger Ansprüche.

Der erfindungsgemäße Sattelauflieger weist eine Ladebrücke auf, die in Längsrichtung in einen vorderen Teil und einen hinteren Teil geteilt ist. Der hintere Ladebrückenteil ist erfindungsgemäß höhenverstellbar mit dem vorderen Ladebrückenteil verbunden. Durch die höhenverstellbare Verbindung kann der hintere Ladebrückenteil gegenüber dem vorderen Ladebrückenteil abgesenkt werden, d.h. der Sattelauflieger aus einer geraden, durchgängigen Ladebrückenstellung in eine Ladebrückenstellung mit gekröpfter Ladebrücke umgerüstet werden. Auf diese Weise kann die Ladebrücke des Sattelaufliegers dem jeweiligen Bedarf entsprechend angepasst werden.

Die Höhenverstellung wird dadurch realisiert, dass der hintere Ladebrückenteils am vorderen Ladebrückenteil über eine Lenkerkonstruktion angelenkt ist, d.h. über eine Gelenkverbindung mit dem vorderen Ladebrückenteil verbunden ist.

Die Lenkerkonstruktion ist um eine quer zur Längsrichtung der Ladebrücke verlaufende erste Schwenkachse schwenkbar mit dem hinteren Ende des vorderen Ladebrückenteils sowie um eine quer zur Längsrichtung der Ladebrücke verlaufende zweite Schwenkachse schwenkbar mit dem vorderen Ende des hinteren Ladebrückenteils verbunden. Diese Art der Anlenkung, die sich unter Beachtung der erforderlichen Festigkeit und Steifigkeit in konstruktiver Hinsicht besonders einfach ausführen lässt, gestattet damit eine Bewegung des hinteren Ladebrückenteils mit zwei Freiheitsgraden. Durch zwei Freiheitsgrade kann im Vergleich zu nur einem Freiheitsgrad flexibler auf mögliche Fertigungsgenauigkeiten reagiert werden. Erfindungsgemäß ist die Lenkerkonstruktion so ausgelegt, dass die erste Schwenkachse in einer ersten Ladebrückenstellung, in der der vordere Ladebrückenteil und der hintere Ladebrückenteil auf gleicher Höhe liegen und eine gerade, durchgängige Ladefläche bereitstellen, bei seitlicher Betrachtung unterhalb der zweiten Schwenkachse und in einer zweiten Ladebrückenstellung, in der der hintere Ladebrückenteil relativ zum vorderen Ladebrückenteil abgesenkt ist und eine gekröpfte Ladefläche bereitgestellt wird, oberhalb der zweiten Schwenkachse liegt.

Zur Höhenverstellung des hinteren Ladebrückenteils relativ zum vorderen Ladebrückenteil ist in einer bevorzugten Ausführungsform eine mechanisch, hydraulisch oder pneumatisch betätigbare Höhenverstellvorrichtung zur Höhenverstellung vorgesehen. Als besonders einfach zu realisieren hat es sich herausgestellt, wenn die Höhenverstellvorrichtung neben einer bei einem Sattelauflieger ohnehin vorhandenen Stützvorrichtung, über die der Sattelauflieger in einem von einem Zugfahrzeug abgekuppelten Zustand, höhenverstellbar am Boden abgestützt werden kann, eine weitere, in Längsrichtung der Ladebrücke von der erstgenannten Stützvorrichtung beabstandet angeordnete höhenverstellbare Stützvorrichtung umfasst. Die Verstellung des hinteren Ladebrückenteils gegenüber dem vorderen Ladebrückenteil kann dann unter Zuhilfenahme der beiden Stützvorrichtungen durchgeführt werden. Beispielsweise kann der hintere Ladebrückenteil, wenn der Sattelauflieger zum Einen auf dem Fahrgestell eines Zugfahrzeugs und zum Anderen auf einer üblicherweise vorhandenen Achsanordnung ruht, unter Zuhilfenahme der beiden Stützvorrichtung unabhängig vom vorderen Stützvorrichtung abgestützt und in der Höhe verstellt werden.

In jedem Fall kann die Höhenverstellung des hinteren Ladebrückenteils relativ zum vorderen Ladebrückenteil mechanisch, hydraulisch oder pneumatisch erfolgen. Weiter kann die Höhenverstellung stufenlos oder gestuft erfolgen bzw. darauf beschränkt sein, dass das hintere Ladebrückenteil genau zwei Relativstellungen gegenüber dem vorderen Ladebrückenteil annehmen kann. So ist in einer bevorzugten Ausführungsform der hintere Ladebrückenteil relativ zum vorderen Ladebrückenteil zwischen einer ersten Ladebrückenstellung, in der der vordere und der hintere Ladebrückenteil auf gleicher Höhe liegen, und einer zweiten Ladebrückenstellung, in der der hintere Ladebrückenteil gegenüber dem vorderen Ladebrückenteil abgesenkt ist, höhenverstellbar. Durch die Beschränkung auf zwei Höhenlagen des hinteren Ladebrückenteils relativ zum vorderen Ladebrückenteil vereinfacht sich der Aufbau der Ladebrücke und damit des Sattelaufliegers.

Im Sinne einer einfachen Bauweise mit der erforderlichen Festigkeit und Steifigkeit sind der vordere und hintere Ladebrückenteil jeweils in Rahmenbauweise beispielsweise mit einem Zentralrahmenträger oder, wie in der bevorzugten Ausführungsform, mit einem, in Längsrichtung der Ladebrücke betrachtet, linken und rechten Hauptrahmenträger ausgeführt, wobei die Lenkerkonstruktion quer zur Längsrichtung der Ladebrücke zwischen den Hauptrahmenträgern des vorderen und hinteren Ladebrückenteils angeordnet ist.

Die möglichen End- und Zwischenstellungen des hinteren Ladebrückenteils relativ zum vorderen Ladebrückenteil können über geeignete Anschlagflächen am vorderen und hinteren Ladebrückenteil oder an der aus den Lenkern gebildeten Lenkerkonstruktion und/oder mit Hilfe einer Arretiervorrichtung, beispielsweise in Form einer Bolzensicherung, eingestellt werden. Abweichend zu den genannten formschlüssig wirkenden Arretierungen sind aber auch kraftschlüssig wirkende Arretierungen möglich.

In der bevorzugten Ausführungsform erfolgt die Arretierung des hinteren Ladebrückenteils in einer bestimmten Position relativ zum vorderen Ladebrückenteils mit Hilfe einer Arretiervorrichtung, die einen am linken und/oder rechten Hauptrahmenträger des einen Ladebrückenteils verschiebbar gelagerten Bolzen aufweist, der mit einer der ersten Ladebrückenstellung entsprechenden ersten Aufnahmebohrung oder einer der zweiten Ladebrückenstellung entsprechenden zweiten Aufnahmebohrung am linken bzw. rechten Hauptrahmenträger des anderen Ladebrückenteils in Eingriff bringbar ist. Die Arretiervorrichtung, d.h. die Arretierbolzen, kann am vorderen Ladebrückenteil wie auch am hinteren Ladebrückenteil angeordnet sein.

Ebenso wie die Höhenverstellung kann die Arretierung des hinteren Ladebrückenteils relativ zum vorderen Ladebrückenteil in einer gewünschten Ladebrückenstellung mechanisch, hydraulisch oder pneumatisch erfolgen.

### Kurzbeschreibung der Zeichnungen

Fig. 1a zeigt eine schematische Seitenansicht des erfindungsgemäßen Sattelaufliegers mit gekröpfter Ladebrücke;
Fig. 1b zeigt eine schematische Seitenansicht des erfindungsgemäßen Sattelaufliegers mit durchgehender Ladebrücke;
Fig. 2a zeigt eine schematische Seitenansicht des erfindungsgemäßen Sattelaufliegers mit gekröpfter Ladebrücke ohne Abdeckung;
Fig. 2b zeigt eine schematische Seitenansicht des erfindungsgemäßen Sattelaufliegers mit durchgehender Ladebrücke ohne Abdeckung;
Fig. 3a zeigt den in Fig. 2a mit "X" angegeben Bereich der Ladebrücke in vergrößertem Maßstab;
Fig. 3b zeigt den in Fig. 2b mit "Y" angegeben Bereich der Ladebrücke in vergrößertem Maßstab;
Fig. 4a zeigt den in Fig. 2a mit "X" angegeben Bereich der Ladebrücke in vergrößertem Maßstab ohne Fußstützen;
Fig. 4b zeigt den in Fig. 2b mit "Y" angegeben Bereich der Ladebrücke in vergrößertem Maßstab ohne Fußstützen;
Fig. 5 zeigt eine schematische Draufsicht auf die Rahmenkonstruktion der Ladebrücke des erfindungsgemäßen Sattelaufliegers im Bereich der Schnittstelle zwischen dem vorderen und hinteren Ladebrückenteil;
Fig. 6 zeigt eine schematische Innenseitenansicht des hinteren Endabschnitts eines Hauptrahmenträgers der Rahmenkonstruktion des vorderen Ladebrückenteils; und
Fig. 7 zeigt eine schematische Innenseitenansicht des vorderen Endabschnitts eines Hauptrahmenträgers der Rahmenkonstruktion des hinteren Ladebrückenteils.

Ausführliche Beschreibung einer bevorzugten Ausführungsform

In den Figuren ist ein erfindungsgemäßer Sattelauflieger 1 zur Ankopplung an ein (nicht gezeigtes) Zugfahrzeug gezeigt.

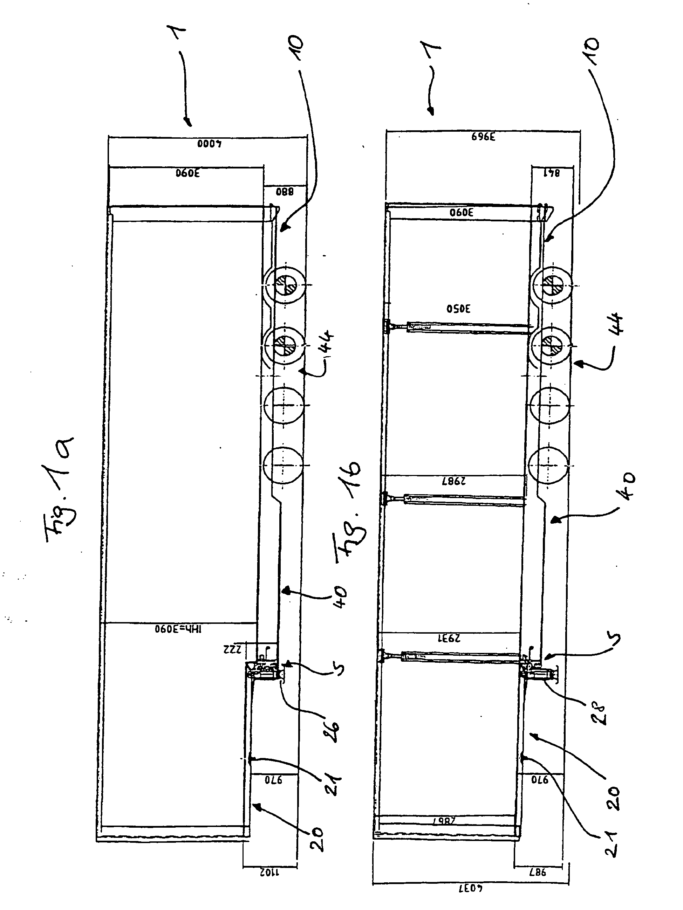

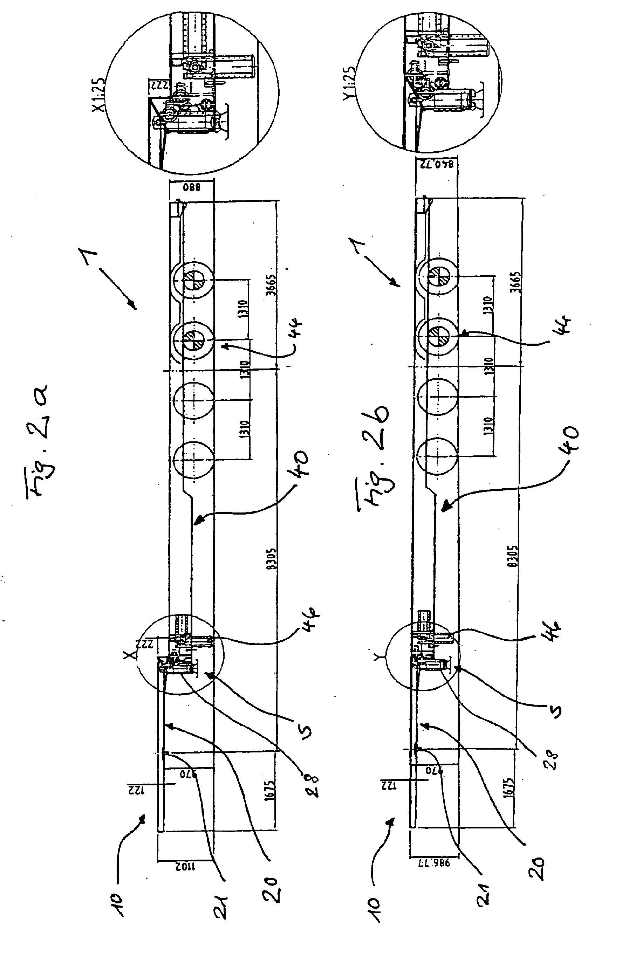

Die in Rahmenbauweise gebaute Ladebrücke 10 des erfindungsgemäßen Sattelaufliegers 1 ist in einen, in (Vorwärts-)Fahrtrichtung betrachtet, vorderen Ladebrückenteil 20 und einen hinteren Ladebrückenteil 40 geteilt, die an der Schnittstelle S über eine am hinteren Ende des vorderen Ladebrückenteils 20 und am vorderen Ende des hinteren Ladebrückenteils 40 über eine Lenkerkonstruktion 60 höhenverstellbar miteinander verbunden sind. In einer ersten Ladebrückenstellung, die in den Figuren 1b und 2b veranschaulicht ist, liegen der vordere Ladebrückenteil 20 und der hintere Ladebrückenteil 40 auf gleicher Höhe, so dass die Ladebrücke 10 gerade oder durchgängig ist, während in einer zweiten Ladebrückenstellung, die in den Figuren 1a und 2a veranschaulicht ist, der hintere Ladebrückenteil 40 gegenüber dem vorderen Ladebrückenteil 20 abgesenkt ist, so dass die Ladebrücke 10 im Bereich der Schnittstelle S eine Kröpfung aufweist.

Der vordere Ladebrückenteil 20 besteht im Wesentlichen aus einer Rahmenkonstruktion 22 mit einer (nicht gezeigten) Ladeplattform, einem Kupplungszapfen 21 zur Ankopplung des Sattelaufliegers 1 an das (nicht gezeigte) Zugfahrzeug, sowie einer vorderen Stützvorrichtung 28 zur Abstützung des Sattelaufliegers 1 auf dem Boden.

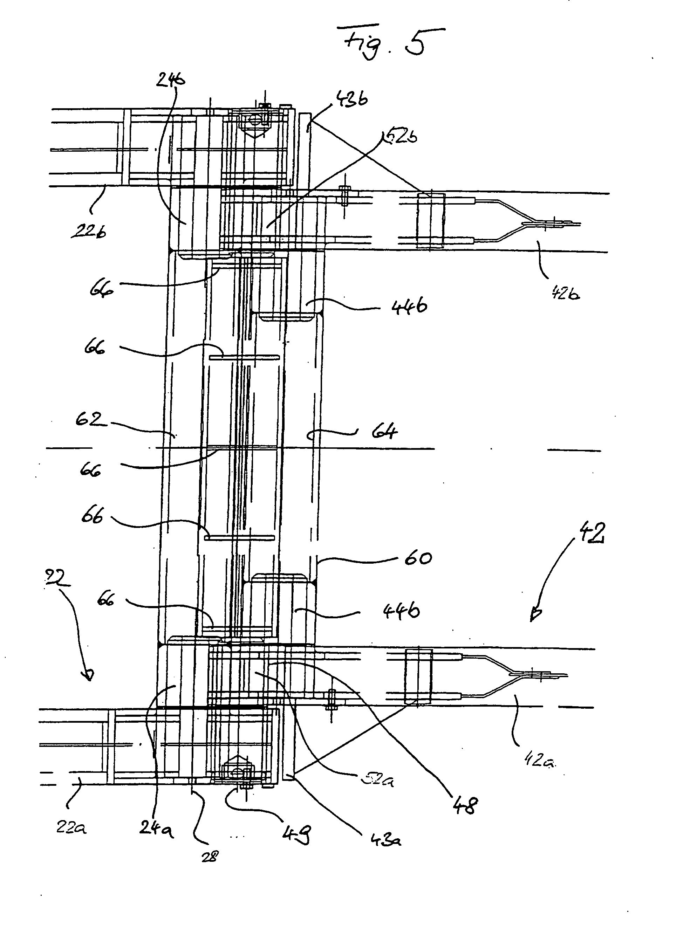

Die Rahmenkonstruktion 22 des vorderen Ladebrückenteils 20 besteht im Wesentlichen aus einem, in Fahrtrichtung betrachtet, linken und rechten Hauptrahmenträger 22a bzw. 22b, die in Fig. 5 zu sehen sind. An dem dem hinteren Ladebrückenteil 40 zugewandten Endabschnitt der Hauptrahmenträger 22a und 22b des vorderen Ladebrückenteils 20 ist jeweils ein in Fahrtrichtung quer nach innen ragenden Achsbolzen 24a bzw. 24b fest angebracht, z.B. verschweißt oder eingepresst.

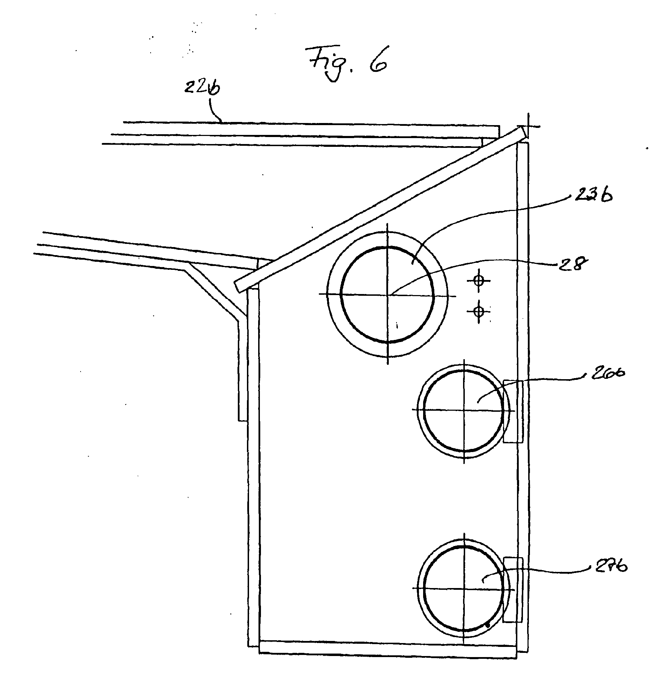

Fig. 6 zeigt eine schematische Innenseitenansicht des hinteren Endabschnitts des rechten Hauptrahmenträgers 22b des vorderen Ladebrückenteils 20. Zu erkennen sind im Besonderen eine Aufnahmebohrung 23b, in der der Achsbolzen 24b mit einem Festsitz aufgenommen wird, sowie eine erste und eine zweite Aufnahmebohrung 26b bzw. 27b, in denen abhängig davon, ob sich der Sattelauflieger 1 in der durchgehenden oder gekröpften Stellung befindet, ein am hinteren Ladebrückenteil 40 quer zur Fahrtrichtung verschiebbar gelagerter Arretierbolzen 52b einer am hinteren Ladebrückenteil 40 vorgesehenen Arretiervorrichtung 50 in der ersten bzw. zweiten Ladebrückenstellung aufgenommen wird. Die erste und zweite Aufnahmebohrung 26b und 27b sind vertikal übereinander in einem bestimmten Abstand angeordnet.

Der linke Hauptrahmenträger 22a ist spiegelbildlich zum rechten Hauptrahmenträger 22b aufgebaut, so dass sich eine ausführlichere Beschreibung des linken Hauptrahmenträgers 22a erübrigt.

Die am vorderen Ladebrückenteil 20 vorgesehenen Achsbolzen 24a und 24b definieren eine erste Schwenkachse 28, an der die Lenkerkonstruktion 60 schwenkbeweglich mit dem vorderen Ladebrückenteil 20 verbunden ist.

Die vordere Stützvorrichtung 28 ist am hinteren Endabschnitt des vorderen Ladebrückenteils 20 höhenverstellbar montiert und für eine Abstützung des Sattelaufliegers 1 sowohl im Leer- als auch im Lastzustand ausgelegt. Die Stützvorrichtung 28 ist von üblicher Bauart, so dass eine weitere Beschreibung nicht erforderlich ist. Die Verstellung der vorderen Stützvorrichtung 28 kann mechanisch, hydraulisch oder pneumatisch erfolgen.

Der auf einer Achsanordnung 44 ruhende hintere Ladebrückenteil 40 besteht im Wesentlichen aus einer Rahmenkonstruktion 42 mit einer (nicht gezeigten) Ladeplattform, einer hinteren Stützvorrichtung 46 zur Abstützung des Sattelaufliegers 1 auf dem Boden sowie einer Arretiervorrichtung 50 zur Arretierung des hinteren Ladebrückenteils 40 relativ zum vorderen Ladebrückenteil 20 in der ersten oder zweiten Ladebrückenstellung.

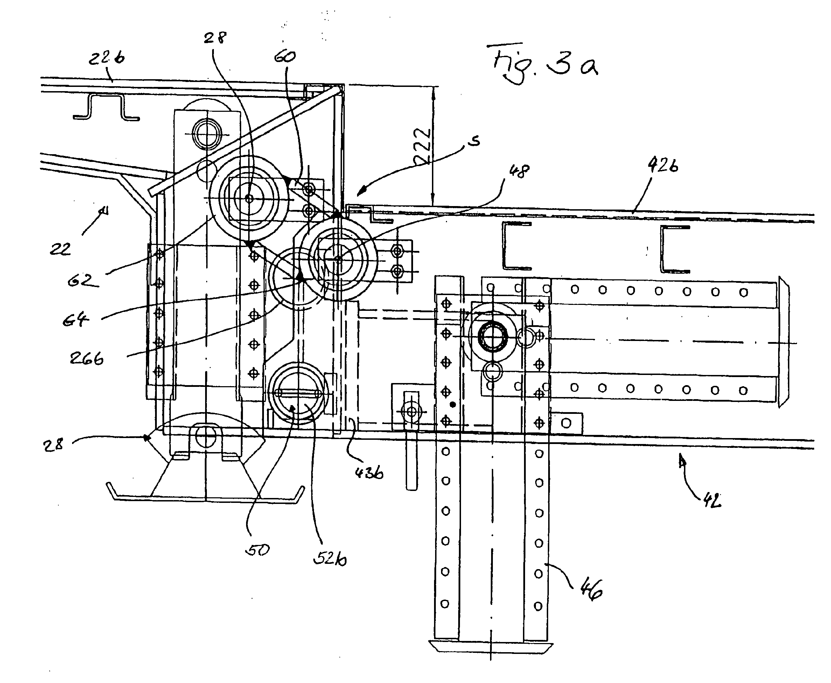

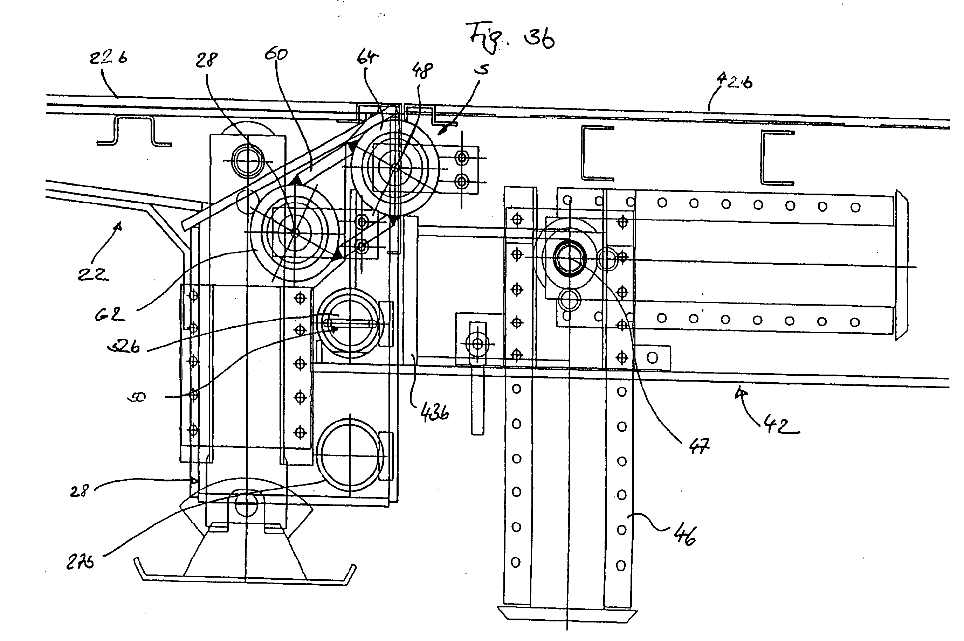

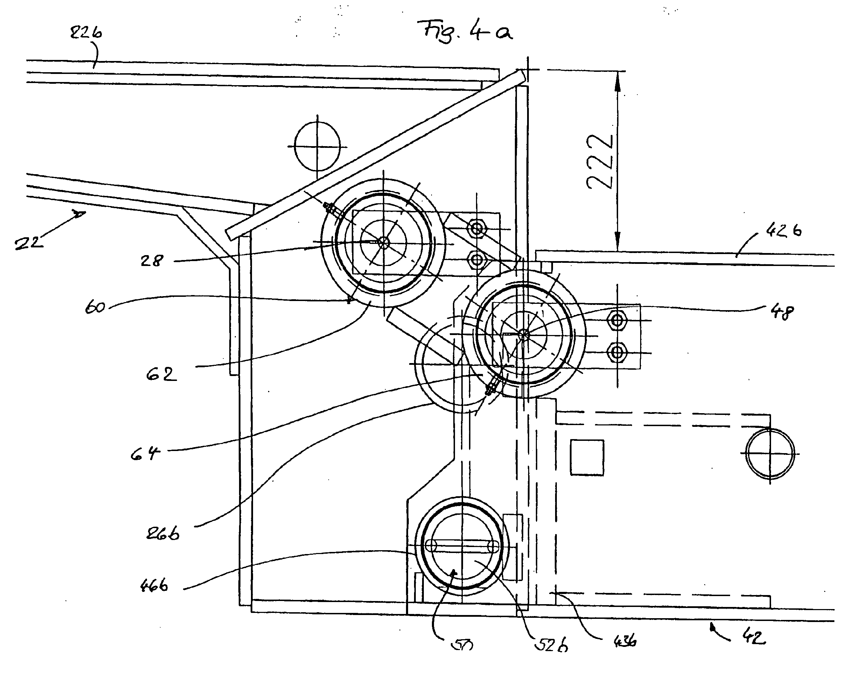

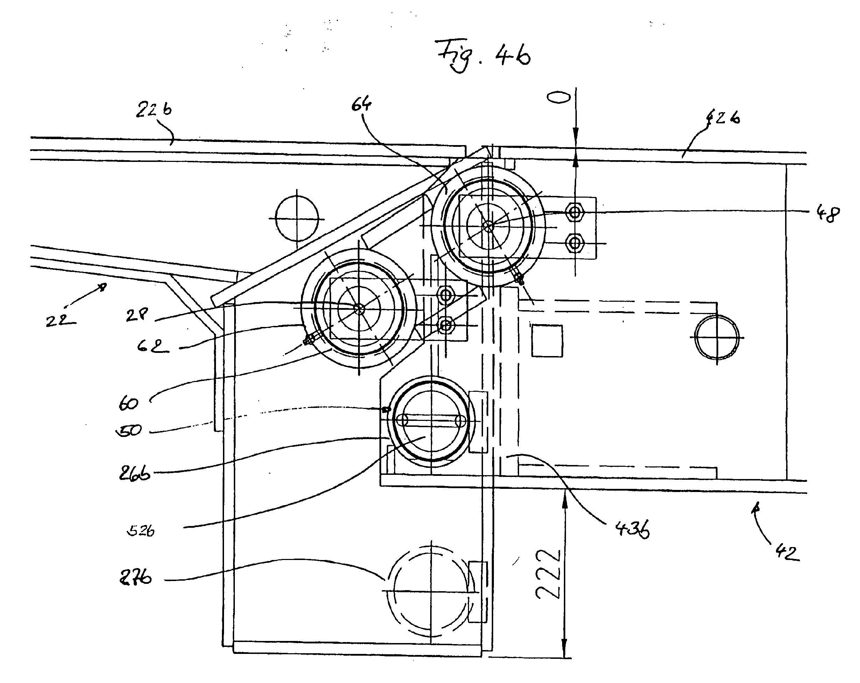

Die Rahmenkonstruktion 42 des hinteren Ladebrückenteils 40 besteht ebenso wie die Rahmenkonstruktion des vorderen Ladebrückenteils 20 im Wesentlichen aus einem, in Fahrtrichtung betrachtet, linken und rechten Hauptrahmenträger 42a bzw. 42b, die, wie es in Fig. 5 zu sehen ist, seitlich innerhalb der Hauptrahmenträger 22a und 22b angeordnet sind. An den dem vorderen Ladebrückenteil 20 zugewandten vorderen Endabschnitten der Hauptrahmenträger 42a und 42b des hinteren Ladebrückenteils 40 ist jeweils ein in Fahrtrichtung quer nach innen ragender Achsbolzen 44a bzw. 44b fest angebracht, z.B. verschweißt oder eingepresst. Des Weiteren sind an der Außenseite der Hauptrahmenträger 42a und 42b jeweils an vorgegebener Stelle Anschläge 43a und 43b vorgesehen, an der die Hauptrahmenträger 22a bzw. 22b des vorderen Ladebrückenteils 20 sowohl in der durchgängigen, ersten Ladebrückenstellung als auch in der gekröpften, zweiten Ladebrückenstellung anliegen, wie es aus den Fig. 3a, 3b, 4a, 4b und 5 zu erkennen ist.

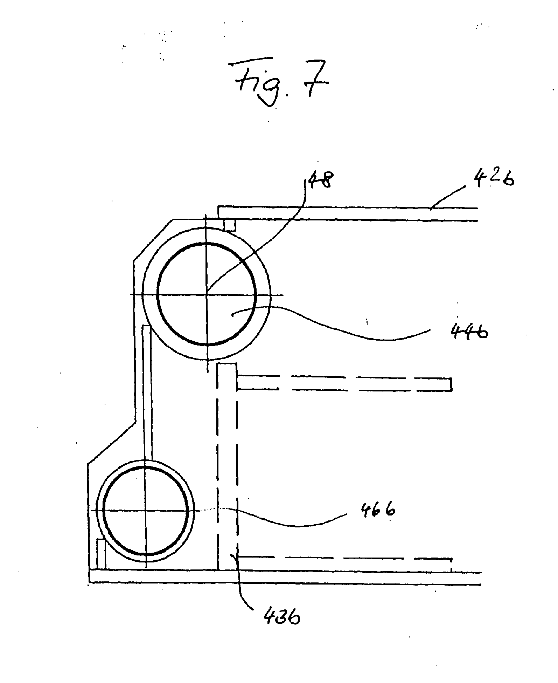

Fig. 7 zeigt eine schematische Innenseitenansicht des hinteren Endabschnitts des rechten Hauptrahmenträgers 42b des hinteren Ladebrückenteils 40. Zu erkennen sind im Besonderen eine Aufnahmebohrung 43b, die den Achsbolzen 44b mit einem Festsitz aufnimmt, sowie eine Aufnahmebohrung 46b, die den quer zur Fahrtrichtung verschiebbaren Arretierbolzen 52b der Arretiervorrichtung 50 zur Arretierung des vorderen Ladebrückenteils 20 relativ zum hinteren Ladebrückenteils 40 in der ersten oder zweiten Ladebrückenstellung Gleitsitz aufnimmt.

Der linke Hauptrahmenträger 42a ist spiegelbildlich zum rechten Hauptrahmenträger 42b aufgebaut, so dass sich eine ausführliche Beschreibung des linken Hauptrahmenträgers 42a erübrigt.

Die an dem hinteren Ladebrückenteil 40 vorgesehenen Achsbolzen 44a und 44b definieren eine zweite Schwenkachse 48, an der die Lenkerkonstruktion 60 schwenkbar mit dem hinteren Ladebrückenteil 40 verbunden ist.

Die hintere Stützvorrichtung 46 ist im Bereich zwischen der Schnittstelle S und der Achsanordnung am vorderen Endabschnitt des hinteren Ladebrückenteils 40 höhenverstellbar sowie um eine quer zur Fahrtrichtung verlaufende Schwenkachse 47 schwenkbar montiert. Im Gegensatz zur vorderen Stützvorrichtung 28 ist die hintere Stützvorrichtung nur zur Abstützung des Sattelaufliegers 1 im Leerzustand ausgelegt. Die Stützvorrichtung 46 ist von üblicher Bauart, so dass eine weitere Beschreibung nicht erforderlich ist. Die Verstellung der hinteren Stützvorrichtung 46 kann mechanisch, hydraulisch oder pneumatisch erfolgen.

Wie es in Fig. 5 zu sehen ist, umfasst die an der Rahmenkonstruktion 42 des hinteren Ladebrückenteils 40 vorgesehene, im Übrigen nicht näher veranschaulichte Arretiervorrichtung 50 zwei Arretierbolzen 52a und 52b. Der Arretierbolzen 52a ist am linken Hauptrahmenträger 42a des hinteren Ladebrückenteils 40 in der Aufnahmebohrung 46a quer zur Fahrtrichtung verschiebbar angeordnet und kann durch mechanische, hydraulische oder pneumatische Betätigung in Eingriff mit der am linken Hauptrahmenträger 22b vorgesehenen Aufnahmebohrung 26a oder 27a gebracht werden, je nachdem ob in der durchgängigen, ersten Ladebrückenstellung oder in der gekröpften, zweiten Ladebrückenstellung arretiert werden soll. Der Arretierbolzen 52b ist gleichermaßen am rechten Hauptrahmenträger 42b des hinteren Ladebrückenteils 40 in der Aufnahmebohrung 46b quer zur Fahrtrichtung verschiebbar angeordnet und kann durch mechanische, hydraulische oder pneumatische Betätigung in Eingriff mit der am rechten Hauptrahmenträger 22b vorgesehenen Aufnahmebohrung 26b oder 27b gebracht werden, je nachdem ob die durchgängige, erste Ladebrückenstellung oder die gekröpfte, zweite Ladebrückenstellung gewünscht ist.

Der vordere Ladebrückenteil 20 und der hintere Ladebrückenteil 40 sind über die Lenkerkonstruktion 60 höhenverstellbar miteinander verbunden. Die Lenkerkonstruktion 60 besteht im Wesentlichen aus zwei in Fahrtrichtung quer angeordneten Lenkerrohren 62 und 64. Das in Fahrtrichtung stets vorne liegende Lenkerrohr 62 ist drehbeweglich auf der durch die Achsbolzen 24a und 24b gebildeten ersten Schwenkachse gelagert. Ähnlich dazu ist das in Fahrtrichtung stets hinten liegende Lenkerrohr 62 drehbeweglich auf der durch die Achsbolzen 44a und 44b gebildeten zweiten Schwenkachse gelagert. In Fig. 5 ist zu sehen, dass das vordere Lenkerrohr 62 aufgrund der Tatsache, dass die Hauptrahmenträger 22a und 22b des vorderen Rahmenbrückenteils 20 seitlich außerhalb der Hauptrahmenträger 24a bzw. 24b des hinteren Rahmenbrückenteils 40 angeordnet sind, länger ist als das hintere Lenkerrohr 64.

Das vordere und hintere Lenkerrohr 62, 64 sind durch eine Vielzahl von in Längsrichtung der Lenkerrohre 42, 62 beabstandet angeordnete Querverbindungsstege 66 fest miteinander verbunden, z.B. verschweißt. Die Lenkerkonstruktion 60 ist damit eine starre Einheit, die über die durch die Achsbolzen 24a und 24b gebildete erste Schwenkachse schwenkbar mit dem vorderen Ladebrückenteil 20 und über die durch die Achsbolzen 44a und 44b gebildete zweite Schwenkachse schwenkbar mit dem hinteren Ladebrückenteil 40 verbunden ist.

Der Abstand zwischen der ersten und zweiten Schwenkachse 28, 48 ist konstant. Ebenso ist der Abstand zwischen der zweiten Schwenkachse 48 und der durch die Arretierbolzen 52a, 52b definierten Verbindungsachse 49 konstant. Des Weiteren liegen die erste und zweite Aufnahmebohrung 26b und 27b vertikal übereinander. Das hintere Ladebrückenteil 40 kann daher bei im Wesentlichen gleichbleibender horizontaler Ausrichtung der Ladebrücke 10 auf einer Kreisbahn mit dem Abstand zwischen der ersten Schwenkachse 28 und der zweiten Schwenkachse 48 als Radius aus der beispielsweise in Fig. 1b und Fig. 2b gezeigten durchgängigen, ersten Ladebrückenstellung in die beispielsweise in Fig. 1a und 2a gezeigte gekröpfte, zweite Ladebrückenstellung um die erste Schwenkachse 28 relativ zum vorderen Ladebrückenteil 20 verstellt werden.

Die Verstellung des hinteren Ladebrückenteils 40 gegenüber dem vorderen Ladebrückenteil 20 erfolgt unter Zuhilfenahme der beiden Stützvorrichtungen 28 und 46. Wenn der Sattelauflieger 1 in einem an einem Zugfahrzeug angekoppelten Zustand auf der Achsanordnung 44 und der vorderen Stützvorrichtung 28 ruht, kann mit Hilfe der hinteren Stützvorrichtung 46 im Leerzustand des Sattelaufliegers 1 der hintere Ladebrückenteil 40 relativ zum vorderen Ladebrückenteil 20 problemlos zwischen der ersten und zweiten Ladebrückenstellung verstellt werden. Die Fixierung des hinteren Ladebrückenteils 40 am vorderen Ladebrückenteils 20 erfolgt in jeder der beiden Ladebrückenstellungen dadurch, dass die Arretierbolzen 52a und 52b in den entsprechenden Aufnahmebohrungen 26a, 26b oder 27a, 27b einrasten und gesichert werden.

Der erfindungsgemäße Sattelauflieger 1 kann daher sowohl mit gekröpfter Ladebrücke, d.h. als sogenannter Semi-Sattelauflieger mit Tiefbett, oder mit gerader, durchgängiger Ladebrücke ohne Kröpfung eingesetzt werden. Die Verstellung der Ladebrücke 1 aus der geraden, durchgängigen Stellung in die gekröpfte Stellung kann, wie erwähnt, über die beiden Stützvorrichtungen 28, 46 mechanisch, hydraulisch oder pneumatisch erfolgen. Die Stützvorrichtungen 28, 46 können so ausgeführt sein, dass sie in Richtung Sattelauflieger federvorgespannt und nur in Richtung Boden mechanisch, hydraulisch oder pneumatisch betätigbar sind.

Gleichermaßen kann die Fixierung der beiden Ladebrückenteile in den beiden Ladebrückenstellungen mit Hilfe der Arretiervorrichtung 50 mechanisch, hydraulisch oder pneumatisch erfolgen. Die Arretiervorrichtung 50 kann dabei ebenfalls so ausgeführt sein, dass die Arretierbolzen 52a, 52b in die eine Hubrichtung, beispielsweise in die Hubrichtung, in der sie in den entsprechenden Aufnahmebohrungen 26a, 26b oder 27a, 27b eingerastet sind, federvorgespannt und nur in die andere Hubrichtung, beispielsweise in die Richtung, in die Arretierung zwischen dem vorderen Ladebrückenteil 20 und dem hinteren Ladebrückenteil 40 aufgehoben wird, mechanisch, hydraulisch oder pneumatisch betätigbar sind.

Des Weiteren kann der erfindungsgemäße Sattelauflieger 1, wie in den Figuren 1a, 1b gezeigt, mit Abdeckung oder, wie in den Figuren 2a, 2b gezeigt, ohne Abdeckung gebaut und eingesetzt werden.

Weiter kann der erfindungsgemäße Sattelauflieger 1 abweichend von der in den Figuren 1a, 1b, 2a und 2b dargestellten Ausführungsform anstatt der gezeigten vier Achsen eine beliebige Zahl von Achsen aufweisen.

Abweichend von der bevorzugten Ausführungsform können neben den vorstehend beschriebenen Ladebrückenstellungen, in denen der vordere Ladebrückenteil 20 im Wesentlichen ohne Zwischenabstand am hinteren Ladebrückenteil 40 anliegt, auch Zwischenladebrückenstellung realisiert werden, indem zwischen den beiden Aufnahmebohrungen 26a, 26b bzw. 27a, 27b weitere Aufnahmebohrungen an geeigneten Stellen vorgesehen werden, in die die Arretierbolzen 52a, 52b einrasten können. In letzterem Fall würde sich natürlich die Gesamtlänge der Ladebrücke geringfügig verlängern.

In der vorstehend beschriebenen bevorzugten Ausführungsform ist die Erfindung an einem Sattelauflieger verwirklicht. Das erfindungsgemäße Konzept der Anlenkung des hinteren Ladebrückenteils an den vorderen Ladebrückenteil kann aber auch auf einen Anhänger übertragen werden, um diesen in in der Art eines Tiefladers umzurüsten. Die Erfindung ist daher nicht auf einen Sattelauflieger beschränkt, wenngleich dieser die derzeit bevorzugte Ausführungsform darstellt und die Ansprüche auf einen Sattelauflieger gerichtet sind, sondern allgemein auf Fahrzeuge, wie Sattelauflieger und Anhänger, anwendbar. Daher behält sich der Anmelder vor, zu einem späteren Zeitpunkt im Wege einer Nachanmeldung oder Teilung um Schutz für ein Fahrzeug nachzusuchen, das eine Ladebrücke aufweist, die in Längsrichtung in einen vorderen Teil und einen hinteren Teil geteilt ist, wobei der hintere Ladebrückenteil höhenverstellbar mit dem vorderen Ladebrückenteil verbunden ist.

## Patentansprüche

1. Sattelauflieger mit einer Ladebrücke (10), die in Längsrichtung in einen vorderen Teil (20) und einen hinteren Teil (40) geteilt ist, wobei
der hintere Ladebrückenteil (40) über eine Lenkerkonstruktion (60) höhenverstellbar den vorderen Ladebrückenteil (20) angelenkt ist, und
die Lenkerkonstruktion (60) um eine quer zur Längsrichtung der Ladebrücke (10) verlaufende erste Schwenkachse (28) schwenkbar mit dem hinteren Ende des vorderen Ladebrückenteils (20) sowie um eine quer zur Längsrichtung der Ladebrücke (10) verlaufende zweite Schwenkachse (48) schwenkbar mit dem vorderen Ende des hinteren Ladebrückenteils (40) verbunden ist, **dadurch gekennzeichnet, dass**
die erste Schwenkachse (28) in einer ersten Ladebrückenstellung in der der vordere und der hintere Ladebrückenteil auf gleicher Höhe liegen unterhalb der zweiten Schwenkachse (48) und in einer zweiten Ladebrückenstellung, in der der hintere Ladebrückenteil gegenüber dem vorderen Ladebrückenteil abgesenkt ist, vertikal oberhalb der zweiten Schwenkachse (48) liegt.

2. Sattelauflieger nach Anspruch 1, **dadurch gekennzeichnet, dass** der vordere und hintere Ladebrückenteil (20; 40) jeweils eine Rahmenkonstruktion mit einem, in Längsrichtung der Ladebrücke betrachtet, linken und rechten Hauptrahmenträger (22a, 22b; 42a, 42b) aufweisen, und die Lenkerkonstruktion (60) quer zur Längsrichtung der Ladebrücke (10) zwischen den Hauptrahmenträgern (22a, 22b; 42a, 42b) des vorderen und hinteren Ladebrückenteils (20; 40) angeordnet ist.

3. Sattelauflieger nach Anspruch 1 oder 2, **gekennzeichnet durch** eine mechanisch, hydraulisch oder pneumatisch betätigbare Arretiervorrichtung (50) zur Arretierung des hinteren Ladebrückenteils (40) relativ zum vorderen Ladebrückenteil (20).

4. Sattelauflieger nach Anspruch 2 und 3, **dadurch gekennzeichnet, dass** die Arretiervorrichtung einen am linken und/oder rechten Hauptrahmenträger (42a, 42b) des einen Ladebrückenteils (40) verschiebbar gelagerten Bolzen (52a, 52b) aufweist, der mit einer der ersten Ladebrückenstellung entsprechenden ersten Aufnahmebohrung (26a, 26b) oder einer der zweiten Lädebrückenstellung entsprechenden zweiten Aufnahmebohrung (27a, 27b) am linken bzw. rechten Hauptrahmenträger (22a, 22b) des anderen Ladebrückenteils (20) in Eingriff bringbar ist.

5. Sattelauflieger nach einem der Ansprüche 1 bis 4, **gekennzeichnet durch** eine mechanisch, hydraulisch oder pneumatisch betätigbare Höhenverstellvorrichtung zur Höhenverstellung des hinteren Ladebrückenteils (40) relativ zum vorderen Ladebrückenteil (20).

6. Sattelauflieger nach Anspruch 5, **dadurch gekennzeichnet, dass** die Höhenverstellvorrichtung zwei in Längsrichtung der Ladebrücke (10) in einem Abstand zueinander angeordnete, höhenverstellbare Stützvorrichtungen (28; 46) zur Abstützung des Sattelaufliegers am Boden umfasst.

7. Sattelauflieger nach Anspruch 6, **dadurch gekennzeichnet, dass** die in Fahrtrichtung des Sattelaufliegers hintere Stützvorrichtung (46) um eine quer zur Längsrichtung der Ladebrücke (10) verlaufende Schwenkachse (47) schwenkbar gelagert angeordnet ist.

## Claims

1. Semi-trailer with a loading bridge (10) which is split into a front part (20) and a rear part (40), and
the rear loading bridge part (40) is linked to the front loading bridge part (20) via a steering structure (60) so as to be height adjustable and
the steering structure (60) is connected to the rear end of the front loading bridge part (20) so that it can be pivoted about a first pivot axis (28) extending transversely to the longitudinal direction of the loading bridge (10) and is connected to the front end of the rear loading bridge part (40) so that it can be pivoted about a second pivot axis (48) extending transversely to the longitudinal direction of the loading bridge (10), **characterised in that**
in a first loading bridge position in which the front and the rear loading bridge parts lie at the same height, the first pivot axis (28) lies underneath the second pivot axis (48) and, in a second loading bridge position in which the rear loading bridge part is lowered relative to the front loading bridge part, lies vertically above the second pivot axis (48).

2. Semi-trailer as claimed in claim 1, **characterised in that** the front and rear loading bridge parts (20; 40) respectively have a frame construction with a left and a right main frame member (22a, 22b; 42a, 42b) as viewed in the longitudinal direction of the loading bridge, and the steering structure (60) is disposed transversely to the longitudinal direction of the loading bridge (10) between the main frame members (22a, 22b; 42a, 42b) of the front and rear loading bridge parts (20; 40).

3. Semi-trailer as claimed in claim 1 or 2, **characterised by** a mechanically, hydraulically or pneumatically operable locking device (50) for locking the rear loading bridge part (40) relative to the front loading bridge part (20).

4. Semi-trailer as claimed in claim 2 and 3, **characterised in that** the locking device has a bolt (52a, 52b) displaceably mounted on the left and/or right mainframe member (42a, 42b) of the one loading bridge part (40) which can be moved into engagement with a first receiving bore (26a, 26b) corresponding to the first loading bridge position or a second receiving bore (27a, 27b) on the left respectively right main frame member (22a, 22b) of the other loading bridge part (20) corresponding to the second loading bridge position.

5. Semi-trailer as claimed in one of claims 1 to 4, **characterised by** a mechanically, hydraulically or pneumatically operable height-adjusting mechanism for adjusting the height of the rear loading bridge part (40) relative to the front loading bridge part (20).

6. Semi-trailer as claimed in claim 5, **characterised in that** the height-adjusting mechanism comprises two height-adjustable support mechanisms (28; 46) disposed at a distance apart from one another in the longitudinal direction of the loading bridge (10) for supporting the semi-trailer on the ground.

7. Semi-trailer as claimed in claim 6, **characterised in that** the rear support mechanism (46) in the direction of travel of the semi-trailer is mounted so that it can be pivoted about a pivot axis (47) extending transversely to the longitudinal direction of the loading bridge (10).

## Revendications

1. Semi-remorque avec une plate-forme de chargement (10) divisée en une partie avant (20) et une partie arrière (40) dans la direction longitudinale, où
la partie arrière (40) de la plate-forme de chargement est articulée sur la partie avant (20) de la plate-forme de chargement au moyen d'une construction à barre de liaison (60), et où
la construction à barre de liaison (60) est reliée à l'extrémité arrière de la partie avant (20) de la plate-forme de chargement (10) de manière à pouvoir pivoter autour d'un premier axe de pivotement (28) s'étendant perpendiculairement à la direction longitudinale, de la plate-forme de chargement (10), et reliée à l'extrémité avant de la partie arrière (40) de la plate-forme de chargement de manière à pouvoir pivoter autour d'un deuxième axe de pivotement (48) s'étendant perpendiculairement à la direction longitudinale de la plate-forme de chargement (10), **caractérisée en ce que**
le premier axe de pivotement (28) est, dans une première position de la plate-forme de chargement où la partie avant et la partie arrière de la plate-forme de chargement sont situées à la même hauteur, situé en-dessous du deuxième axe de pivotement (48) en-dessous, et, dans une deuxième position de la plate-forme de chargement où la partie arrière de la plate-forme de chargement est abaissée par rapport à la partie avant de la plate-forme de chargement, situé verticalement au-dessus du deuxième axe de pivotement (48).

2. Semi-remorque selon la revendication 1, **caractérisée en ce que** la partie avant et la partie arrière de la plate-forme de chargement (20 ; 40) comportent chacune une construction de châssis avec une entretoise principale de châssis gauche et droite (22a, 22b ; 42a, 42b) relativement à la direction longitudinale de la plate-forme de chargement, et **en ce que** la construction à barre de liaison (60) est disposée perpendiculairement à la direction longitudinale de la plate-forme de chargement (10), entre les entretoises principales de châssis (22a, 22b ; 42a, 42b) des parties avant et arrière de la plate-forme de chargement (20 ; 40).

3. Semi-remorque selon la revendication 1 ou 2, **caractérisée par** un mécanisme de blocage (50) à actionnement mécanique, hydraulique ou pneumatique, pour le blocage de la partie arrière (40) de la plate-forme de chargement relativement à la partie avant (20) de la plate-forme de chargement.

4. Semi-remorque selon les revendications 2 et 3, **caractérisée en ce que** le mécanisme de blocage comporte un axe (52a, 52b) monté de manière à pouvoir coulisser sur l'entretoise principale de châssis gauche et/ou droite (42a, 42b) de la première partie (40) de la plate-forme de chargement, lequel peut être amené en prise avec un premier alésage de réception (26a, 26b) correspondant à la première position de la plate-forme de chargement ou avec un deuxième alésage de réception (27a, 27b) correspondant à la deuxième position de la plate-forme de chargement sur l'entretoise principale de châssis gauche ou droite (22a, 22b) de l'autre partie (20) de la plate-forme de chargement.

5. Semi-remorque selon l'une des revendications 1 à 4, **caractérisée par** un mécanisme de réglage de hauteur à actionnement mécanique, hydraulique ou pneumatique, pour le réglage de hauteur de la partie arrière (40) de la plate-forme de chargement relativement à la partie avant (20) de la plate-forme de chargement.

6. Semi-remorque selon la revendication 5, **caractérisée en ce que** le mécanisme de réglage de hauteur comprend deux mécanismes d'appui (28 ; 46) réglables en hauteur, disposés à intervalle l'un de l'autre dans la direction longitudinale de la plate-forme de chargement (10), pour l'appui de la semi-remorque au sol.

7. Semi-remorque selon la revendication 6, **caractérisée en ce que** le mécanisme d'appui (46) arrière dans le sens de marche de la semi-remorque est monté de manière à pouvoir pivoter autour d'un axe de pivotement (47) s'étendant perpendiculairement à la direction longitudinale de la plate-forme de chargement (10).
